# EUROPEAN PATENT SPECIFICATION

(11) **EP 1 756 241 B1**
(45) Date of publication and mention of the grant of the patent: **04.03.2009**
(21) Application number: 05747034.6
(22) Date of filing: 27.04.2005
(51) Int. Cl.: C09J 5/00, C09J 11/06, C09J 5/06

(54) **METHOD FOR FORMING STRUCTURES USING AN ENCAPSULATED ADHESIVE MATERIAL**
KONSTRUKTIONSVERFAHREN UNTER VERWENDUNG EINES UMKAPSELTEN KLEBSTOFFS
MATIERE ADHESIVE ET STRUCTURES FORMEES A L'AIDE DE LADITE MATIERE

(30) Priority: 28.04.2004 US 565964 P; 26.04.2005 US 114631
(43) Date of publication of application: 28.02.2007
(73) Proprietor: Zephyros Inc., Romeo, MI 48065 (US)
(72) Inventor: HARTHCOCK, Matthew, Oakland Township, MI 48306 (US); HABLE, Christopher, Romeo, MI 48065 (US)
(74) Representative: Bawden, Peter Charles
(86) International application number: PCT/US2005/014385
(87) International publication number: WO 2005/104744

(56) References cited:
- WO-A-20/04104125
- GB-A- 1 265 489
- GB-A- 1 291 753
- US-A- 5 942 330
- US-A1- 2002 119 331

## Description

### Field of the invention

The present invention relates to the use of an adhesive material, which is typically activated by a stimulus experienced during manufacture of the wing of an airplane.

### Background of the invention

Manufacture of various articles such as buildings, furniture, transportation vehicles or the like typically involve several processing steps. During such processing steps, adhesive materials that assist in forming the articles of manufacture are typically exposed to a variety of stimuli such as heat, pressure, humidity, combinations thereof or the like. Industry, in general, has attempted to create materials that do not interfere with these manufacturing processes. Furthermore, industry has attempted to create materials that use the stimuli of these processing steps to assist in desired formation of the articles of manufacture. In the interest of continuing such innovation, the present invention provides an adhesive material that can be activated by a stimulus experienced during manufacture and provides one or more structures that incorporate the material.

### Brief description of the drawings

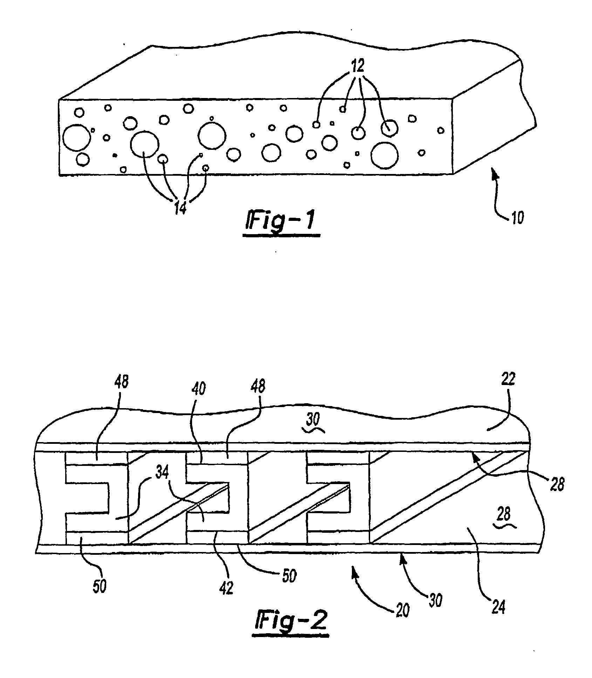

The features and inventive aspects of the present invention will become more apparent upon reading the following detailed description, claims, and drawings, of which the following is a brief description: Fig. 1 is a perspective cut away view of an exemplary adhesive material used in accordance with an aspect of the present invention; and Fig. 2 is a perspective cut away view of an exemplary structure formed in accordance with an aspect of the present invention.

### Detailed description of the invention

More particularly, the present invention is predicated upon the use of an adhesive material that is naturally activated by processing steps that are used to form the wing of an airplane. As such, the present invention is also related to a method of forming wings of airplanes that are advantageously formed using the adhesive material. While the adhesive material typically adheres to one or more members for assisting in the formation of a structure of the wing of an airplane, it is further contemplated that the adhesive material can assist in providing functional attributes such as structural reinforcement, baffling, sealing, acoustical damping properties, vibration damping properties or a combination thereof within a cavity or upon a surface of a wing of an aircraft. Generally, the adhesive material includes the following:
1) a polymeric component that includes at least 10% of an epoxy based material; and
2) one or more curing or reactive agents for curing or reacting at least a portion of the polymeric component;
wherein at least a portion of the adhesive material is located within encapsulations, typically the adhesive material is activated to cure by exposing the adhesive material to a stimulus that causes the encapsulation to fail. This may be by the application of a stimulus such as pressure and activation typically includes curing at least a portion of the polymeric component with the assistance of the one or more curing agents.

### Polymeric component

The adhesive material typically includes a polymeric component, which may comprise an admixture of multiple different polymeric materials (e.g., thermoplastics, elastomers, plastomers, plasticizer, plastic, combinations thereof or the like) or may substantially comprise only one or two different polymeric materials. Examples of suitable polymeric materials include halogenated polymers, polycarbonates, polyketones, urethanes, polyols, polyethers, polyesters, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer), mixtures thereof or the like. Other potential polymeric materials, which may or may not be combined with the above materials include, without limitation, polyethylene, polypropylene, polystyrene, polyolefin, polyacrylate, poly(ethylene oxide), poly(ethyleneimine), polyester, polyurethane, polysiloxane, polyether, polyphosphazine, polyamide, polyimide, polyisobutylene, polyacrylonitrile, polyvinyl chloride), poly(methyl methacrylate), polyvinyl acetate), poly(vinylidene chloride), polytetrafluoroethylene, polyisoprene, polyacrylamide, polyacrylic acid, polymethacrylate, combinations thereof or the like.

The adhesive material comprises at least 10% more typically at least 30% and even more typically at least 60% by weight of the epoxy based material. The adhesive material also typically comprises less than 90% or greater, more typically less than 80% and even more typically less than 70% by weight of the epoxy based material.

It is preferred that the adheisve includes at least 30%, more typically at least 45% and even more typically at least 65% epoxy materials. The adhesive material may be formed from a variety of formulations having epoxy material and preferably epoxy resin integrated therein. Epoxy resin or material is used herein to mean any of the conventional dimeric, oligomeric or polymeric epoxy materials containing at least one epoxy functional group. The epoxy materials may be epoxy-containing materials having one or more oxirane rings polymerizable by a ring opening reaction.

The epoxy may be aliphatic, cycloaliphatic, aromatic or the like. The epoxy may be supplied as a solid (e.g., as pellets, chunks, pieces or the like) or a liquid. The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive.

While the present invention specifically addresses epoxy, systems. Other polymeric systems may be used in addition to epoxy systems.

### Curing agent

Various curing agents and/or curing agent accelerators may be employed in the adhesive material of the present invention. Amounts of curing agents and curing agent accelerators can vary widely within the adhesive material depending upon the desired cure rate, the desired properties or attributes of the adhesive material or the like. Thus, the adhesive material can include at least 0.1 % or less, more typically at least 1% and even more typically at least 3% by weight curing agent, curing agent accelerator or both. However, the adhesive material typically includes less than 60% or greater, more typically less than 35%, even more typically less than 15%, even more typically less than 11% and still more typically less than 7% by weight curing agent, curing agent accelerator or both

Typically, the curing agents assist the adhesive material and particularly the polymeric component thereof in curing by crosslinking or other reacting of the polymeric compounds of the polymeric component. It is also typical, although not required, for the curing agents to assist in thermosetting the adhesive material.

Amines, amides, peroxides or other chemicals are examples of typical curing agents or curing agent accelerators suitable for curing epoxies, acrylates, combinations thereof or the like. Useful classes of curing agents for such polymeric compounds include, without limitation, aliphatic or aromatic amines or their respective adducts, amidoamines, polyamides, cycloaliphatic amines, anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), peroxides or mixtures thereof. Other exemplary curing agents include modified and unmodified polyamines or polyamides such as triethylenetetramine, diethylenetriamine tetraethylenepentamine, cyanoguanidine, dicyandiamides and the like. Exemplary accelerators for the curing agents might include a modified or unmodified urea such as methylene diphenyl bis urea, an imidazole, a tertiary amine, a combination thereof or the like.

For isocyanate-reactive compounds, isocyanates are typically used for curing those compounds and for forming urethanes in the adhesive. It is contemplated that most any isocyanate having one or more isocyanate groups in the molecule may be used as a curing agent and may be used for curing the isocyanate-reactive compounds of the adhesive material. Both aliphatic or cycloaliphatic isocyanates, such as hexamethylene diisocyanate (HDI) or isophorone diisocyanate (IPDI) and/or aromatic isocyanates, such as toluene diisocyanate (TDI), diphenylmethane diisocyanate (MDI) or mixtures of diphenylmethane diisocyanate and polymethylenepolyphenylene polyisocyanates (crude MDI), mixture of TDI and MDI, combinations thereof or the like may be used. It is also possible to use isocyanates which were modified by the incorporation of urethane, uretidione, isocyanurate, allophanate, uretonimine and other groups, i.e. modified isocyanates.

Some particularly readily available polyisocyanates include, without limitation, 2,4- and 2,6-toluene diisocyanates and mixtures of these isomers ("TDI"); polyphenyl-polymethylene-polyisocyanates of the type obtained by condensing aniline with formaldehyde, followed by phosgenation ("crude MDI"); and polyisocyanates containing carbodiimide groups, urethane groups, allophanate groups, isocyanurate groups, urea groups, or biuret groups ("modified polyisocyanates").

### Fillers

The adhesive material of the present invention may include one or more fillers. When included, the adhesive material typically comprises at least 2 % or less, more typically at least 7 % and even more typically at least 15% by weight filler. Also when included, the adhesive material typically comprises less than 60% or greater, more typically less than 40% and even more typically less than 30% by weight filler.

The fillers of the adhesive material may also include, without limitation, particulated materials (e.g., powder), beads, microspheres, or the like. Preferably the filler includes a relatively low-density material that is generally non-reactive with the other components present in the adhesive material.

Examples of fillers include silica, diatomaceous earth, glass, clay, nanoparticles (e.g., nanoclay), talc, pigments, colorants, glass beads or bubbles, glass, carbon ceramic fibers, antioxidants, and the like. Such fillers, particularly clays, can assist the adhesive material in leveling itself during flow of the material. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed.

In one preferred embodiment, one or more mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular can improve the impact resistance of the cured adhesive material.

It is contemplated that one of the fillers or other components of the material may be thixotropic for assisting in controlling flow of the material as well as properties such as tensile, compressive or shear strength.

### Additives

Other additives, agents or performance modifiers may also be included in the adhesive material as desired, including but not limited to a UV resistant agent, a flame retardant, an impact modifier, a heat stabilizer, a UV photoinitiator, a colorant, a processing aid, an anti-oxidant, a lubricant, a coagent, a reinforcement materials (e.g., chopped or continuous glass, glass fiber, ceramics and ceramic fibers, aramid fibers, aramid pulp, carbon fiber, acrylate fiber, polyamide fiber, polypropylene fibers, combinations thereof or the like). In one preferred embodiment, for example, an acrylate coagent may be employed for enhancing cure density. It is also contemplated that the adhesive material may include 0.10 to 5.00 weight percent of an anti-oxidant such as a propionate (e.g., pentaerythritol tetrakis (3-(3,5-di-tert-butyl-4-hydroxyphenyl) propionate)) for assisting in controlling oxidation, cure rate or both. An example of such an anti-oxidant is sold under the tradename IRGANO^{®} 1010 and is commercially available from Ciba Specialty Chemicals Company, 141 Klybeckstrasse, Postfach, 4002 Basel, Switzerland.

### Activation

The adhesive material is typically activated to cure upon the exposure to a stimulus. Although it is contemplated that various additional or alternative stimuli such as heat, moisture or the like may be employed, the adhesive material is preferably activated to at least partially cure upon exposure to elevated pressure. In a preferred embodiment, the polymeric component or at least a portion thereof is maintained separate from the curing agent until the adhesive material is exposed to a pressure sufficient to expose the polymeric component to the curing agent.

Typically, although not necessarily required, the polymeric component is maintained separate from the curing agent by encapsulating at least a portion of the polymeric compounds of the polymeric component, the curing agent or both of the adhesive material. Then, upon application of sufficient pressure, the encapsulation will typically fail (e.g., rupture, melt, flow or the like) thereby exposing the polymeric compounds to the curing agent with which they are reactive. With reference to Fig. 1, an adhesive material 10 according to the present invention is schematically shown. As can be seen, the adhesive material 10 includes both encapsulated polymeric compound 12 and encapsulated curing agent 14. It is additionally contemplated that, when used, any curing agent accelerator may also be encapsulated.

Various types of encapsulating techniques may be employed for forming the desired encapsulated material. For example, and without limitation, techniques such as submerged nozzle extrusion, spinning disc coating, interfacial polymerization, coacervation, spray drying, fluidized bed coating, combinations thereof or the like. The particular technique used and the type of encapsulation formed can depend upon the material to be encapsulated and the state (e.g., liquid, solid, gas or combination thereof) of that material. Exemplary materials that form the encapsulation can include polymeric materials (e.g., thermoplastics, elastomers, plastics, waxes, thermosets, combinations thereof or the like).

Various sizes, shapes and thickness, various different materials, combinations thereof or the like for the encapsulation can provide or allow for rupture of the encapsulation at different pressure levels. Thus, rupture of the encapsulation and, therefore, activation of the adhesive material can occur at a variety of different pressures. Typically, the pressure of activation is at least greater than atmospheric pressure (e.g., at least 150 kPA, more typically at least 1MPa and even more typically at least 10 MPa). polymeric component with the curing agent may liberate a gas for foaming or expanding the adhesive material. If used, the foaming or expansion of the adhesive material may be able to assist the adhesive material in wetting and/or adhering to members of a structure.

Generally, for polyurethane systems (e.g, systems with isocyanates and isocyanate-reactive compounds) various different combinations of components can provide for a system that only cures or for a system that expands or foams and cures.

For other systems (e.g., epoxy/amine, acrylate/amine, acrylate/peroxide or other systems), and even for polyurethane systems, an additional blowing agent (e.g., a physical or chemical blowing agent) may be needed or desired for foaming or expanding. Exemplary blowing agents can include one or more nitrogen containing groups such as amides, amines and the like or can be thermoplastic encapsulated solvents or other chemicals. Typically, for a pressure activated system, it is desirable for the blowing agents to create a blowing effect at a temperature below 100°C; more typically below 70°C and even more typically below 40°C (e.g., about room temperature 23°C). Thus, when included, the blowing agent may be encapsulated in a manner as described for the polymeric compounds, the curing agents or both.

An accelerator for the blowing agents may also be provided in the adhesive material and may be encapsulated as well. Various accelerators may be used to increase the rate at which the blowing agents form inert gasses. One exemplary blowing agent accelerator is a metal salt, or is an oxide, e.g. a metal oxide, such as zinc oxide. Other exemplary accelerators include modified and unmodified thiazoles or imidazoles.

The blowing agent, the blowing agent accelerator, or both, when included, are generally included in the adhesive material in an amount of from 0.05 to 7% by weight, based on total weight of adhesive material, preferably from 0.1 to 6% by weight, most preferably from 0.5 to 5% by weight.

### Formation

Formation of the adhesive material can be accomplished according to a variety of new or known techniques. Preferably, the adhesive material is formed as a material of substantially homogeneous composition. However, it is contemplated that various combining techniques may be used to increase or decrease the concentration of certain components in certain locations of the adhesive material.

According to one embodiment, the adhesive material is formed by supplying the components of the material in solid form such as pellets, chunks, encapsulations and the like, in liquid form or a combination thereof. The components are typically combined in one or more containers such as large bins or other containers. Preferably, the containers can be used to intermix the components by rotating or otherwise moving the container or the material therein. Thereafter, heat, pressure or a combination thereof may be applied ' to soften or liquidize the components such that the components can be intermixed by stirring or otherwise into a single homogenous composition. When used, such heat and/or pressure are typically relatively low so as not to damage or rupture any encapsulations. Thus, it may be desirable for the polymeric compounds and/or other components of the adhesive material to have relatively low viscosities for allowing mixing under lower pressure and lower heat conditions.

According to another embodiment, the activatable material may be formed by heating one or more of the components that is generally easier to soften or liquidize such as the polymer based materials to induce those components into a mixable state. Thereafter, the remaining components may then be intermixed with the softened components.

### Application

The adhesive material is located between at least one surface of a first member and at least one surface of a second member of the wing of an aircraft. Once between the members, and preferably contacting the surfaces of the members, the adhesive material is typically exposed to a stimulus, which is typically a pressure, that activates the adhesive material. Such pressure may be applied by moving the surface of the first member toward the surface of the second member or may be otherwise applied.

Referring to Fig. 2, there is illustrated a wing (20) of an airplane. The wing (20) includes a pair of first members shown as a first or upper panel (22) (e.g., skin) and a second or lower panel (24) (e.g., skin). As can be seen, each of the panels (22), (24) includes an inner or first surface (28) and an outer or second surface (30).

A plurality of second members, shown as ribs (34), are located between the panels (22), (24). As shown, each of the ribs (34) are generally channel shaped, although the ribs (34) could be otherwise shaped as desired. Each of the ribs (34) also typically includes one or more attachment surfaces. In the embodiment shown, each of the ribs (34) includes a first or upper attachment surface (40) opposing the inner surface (28) of the first panel (22) and a second or lower attachment surface (42) opposing the inner surface (28) of the second panel (24).

Masses of adhesive material of the present invention can be located between the ribs 34 and the first panel (22), the second panel (24) or both of the wing (20) for adhering the ribs (34) to the panels (22), (24). In the particular embodiment shown, strips (48), (50) of the adhesive material have been located respectively between the attachment surfaces (40), (42) of each rib (34) and the inner surfaces (28), of the first and second panels (22), (24). For locating the adhesive material, techniques such as extrusion, molding-in-place or other techniques may be used to apply (e.g., adhere) the adhesive material to the surfaces of the ribs, the panels or combinations thereof.

During assembly of the wing (e.g., assembly or attachment of the panels and ribs together), the strips (48), (50) of adhesive material are typically compressed between surfaces (40), (42) of the ribs (34) and the surfaces of the panels (22), (24) such that the strips (48), (50) are exposed to a pressure sufficient to activate the adhesive material. The pressure may be exerted during the fastening or attachment of the components such as the panels and the ribs together or to each other, although other processing steps may also apply pressure. Such attachment or fastening may include, without limitation, mechanical fastening (e.g., with rivets, screw or other mechanical fastening), adhesive fastening, combinations thereof or the like.

Typically, the adhesive material, during processing, is exposed to a pressure greater than 0.689 MPa (100 psi) more typically greater than 6.25 MPa (900 psi) and even more typically greater than 17.24 MPa (2500 psi) (e.g., 20.68 MPa (3000 psi) such that the encapsulations of the polymeric compounds, the curing agent, curing agent accelerator, or a combination thereof and, if used, the encapsulations of the blowing agent, the blowing agent accelerator or both fail (e.g., rupture) such that the adhesive material can cure, expand or foam and adhere to the surfaces (40), (42), (28) of the ribs (34) and panels (22), (24).

Although cure times for substantial curing (e.g., at least 80% of cure properties) of the adhesive material can vary widely, cure times are typically at least 5 hours or less, more typically at least 10 hours and even more typically at least 15 hours. Cures times are also typically less than 1000 hours or greater, more typically less than 100 hours and even more typically less than 30 hours.

In other particular alternative embodiment, it is contemplated that the adhesive material of the present invention may be employed in conjunction with one or more mechanical fasteners (e.g., threaded fasteners such as nut and bolt assemblies, clamps, combinations thereof or the like). In such an embodiment, the adhesive material is place between two members of an article of manufacture, between two components (e.g., a nut and bolt) of the fastener, between a component of the fastener and a member of an article of manufacture or a combination thereof. Then, upon application of pressure applied by the fastener (e.g., upon tightening or damping of the fastener), the adhesive material can be activated as described above and can adhere to the member of the article and/or to the fastener.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate .plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

## Claims

1. A method of forming a structure of an article of manufacture, the method comprising: providing a first member and a second member of the structure wherein the first and second member are wing portions of an airplane; locating adhesive material that includes at least 10 wt % of a polymeric component that is epoxy based between the first member and the second member, wherein at least a portion of the adhesive material is located within encapsulations; and activating the adhesive material to cure between the first member and the second member by exposing the adhesive material to a stimulus that causes the encapsulations to fail.

2. A method as in claim 1 wherein the encapsulations fail by rupturing, flowing or melting.

3. A method as in claim 1 or 2 wherein the adhesive material includes at least one curing agent and activating the adhesive material includes exposing the expoy based material to the at least one curing agent thereby causing the adhesive material to cure and adhere to the first member and the second member.

4. A method as in claim 3 wherein the encapsulations encapsulate at least a portion of the epoxy based material, the at least one curing agent or both.

5. A method as in claim 3 or claim 4 wherein the at least one curing agent includes an amine, an amide, an isocyanate or a peroxide.

6. A method as in claim 3, 4, or 5 wherein the at least one curing agent is at least 1 %, but less than 60% by weight of the adhesive material.

7. A method as in any of the preceding claims wherein the adhesive contains from 30% to less than 80% by weight of the epoxy based material.

8. A method as in any of claims 3-7 wherein the at least one curing agent can cure the polymeric component at a temperature below 100° C.

9. A method as in any of claims 1-8 wherein the first member is a rib and the second member is a panel.

10. A method as in any of claims 1-9 wherein the step of activating the adhesive material includes applying pressure to the adhesive material such that the encapsulations rupture thereby causing the adhesive material to cure between and adhere to the first member and the second member and form the structure.

11. A method as in claim 10 wherein the pressure is at least 1 MPa.

12. A method as in claim 10 or 11 wherein the pressure is applied by compressing the adhesive material between the first member and the second member.

13. A method as in any of the preceding claims wherein the encapsulations are formed of a thermoplastic.

## Patentansprüche

1. Verfahren zum Bilden einer Struktur eines Artikels aus einer Herstellung, wobei das Verfahren umfasst:
Bereitstellen eines ersten Teils und eines zweiten Teils der Struktur, wobei der erste und der zweite Teil Tragflächenanteile eines Flugzeugs sind; Anordnen eines Klebstoffs, der mindestens 10 Gewichtsprozent einer epoxidbasierten polymeren Komponente umfasst, zwischen dem ersten Teil und dem zweiten Teil, wobei mindestens ein Teil des Klebstoffs in Umkapselungen angeordnet ist; und
Aktivieren des Klebstoffs, um zwischen dem ersten Teil und dem zweiten Teil auszuhärten, **dadurch**, dass der Klebstoff einem Stimulus ausgesetzt wird, der verursacht, dass die Umkapselungen versagen.

2. Verfahren gemäß Anspruch 1, wobei die Umkapselungen durch Zerreißen, Umströmen oder Schmelzen versagen.

3. Verfahren gemäß Anspruch 1 oder 2, wobei der Klebstoff mindestens ein Vernetzungsmittel umfasst und ein Aktivieren des Klebstoffs umfasst, dass das epoxidbasierte Material dem mindestens einen Vernetzungsmittel ausgesetzt wird, wodurch verursacht wird, dass der Klebstoff aushärtet und mit dem ersten Teil und dem zweiten Teil verklebt.

4. Verfahren gemäß Anspruch 3, wobei die Umkapselungen mindestens einen Teil des epoxidbasierten Materials, das mindestens eine Vernetzungsmittel oder beide umkapselt.

5. Verfahren gemäß Anspruch 3 oder 4, wobei das mindestens eine Vernetzungsmittel ein Amin, ein Amid, ein Isocyanat, oder ein Peroxid umfasst.

6. Verfahren gemäß Anspruch 3, 4 oder 5, wobei das mindestens eine Vernetzungsmittel mindestens 1 aber weniger als 60 Gewichtsprozent des Klebstoffs ausmacht.

7. Verfahren gemäß einem der vorangehenden Ansprüche, wobei der Klebstoff 30 bis weniger als 80 Gewichtsprozent des epoxidbasierten Materials enthält.

8. Verfahren gemäß einem der Ansprüche 3 - 7, wobei das mindestens eine Vernetzungsmittel die polymere Komponente bei einer Temperatur unter 100°C aushärten kann.

9. Verfahren gemäß einem der Ansprüche 1 - 8, wobei der erste Teil eine Rippe und der zweite Teil eine Platte ist.

10. Verfahren gemäß einem der Ansprüche 1 - 9, wobei der Schritt eines Aktivierens des Klebstoffs ein Zuführen von Druck auf den Klebstoff umfasst, so dass das Versagen der Umkapselung **dadurch** verursacht, dass der Klebstoff zwischen dem ersten Teil und dem zweiten Teil aushärtet und mit diesen Teilen verklebt, um die Struktur zu bilden.

11. Verfahren gemäß Anspruch 10, wobei der Druck mindestens 1 Mpa beträgt.

12. Verfahren gemäß Anspruch 10 oder 11, wobei der Druck durch ein Zusammendrücken des Klebstoffs zwischen dem ersten Teil und dem zweiten Teil zugeführt wird.

13. Verfahren gemäß einem der vorangehenden Ansprüche, wobei die Umkapselungen aus einem Thermoplastkunststoff geformt werden.

## Revendications

1. Procédé de formation d'une structure d'un article de fabrication, le procédé comprenant : la fourniture d'un premier organe et d'un second organe de la structure, où le premier et le second organe sont des portions d'aile d'un avion ; la location d'un matériau adhésif qui comprend au moins 10 % en poids d'un composé polymère qui est à base d'époxy entre le premier organe et le second organe, où au moins une portion du matériau adhésif est située à l'intérieur d'encapsulations ; et l'activation du matériau adhésif pour qu'il se vulcanise entre le premier organe et le second organe en exposant le matériau adhésif à un stimulus qui amène les encapsulations à lâcher.

2. Procédé selon la revendication 1, dans lequel les encapsulations lâchent par rupture, écoulement ou fusion.

3. Procédé selon la revendication 1 ou 2, dans lequel le matériau adhésif comprend au moins un agent de vulcanisation et l'activation du matériau adhésif comprend l'exposition du matériau à base d'époxy au au moins un agent de vulcanisation, amenant ainsi le matériau adhésif à se vulcaniser et à adhérer au premier organe et au second organe.

4. Procédé selon la revendication 3, dans lequel les encapsulations encapsulent au moins une portion du matériau à base d'époxy, le au moins un agent de vulcanisation ou les deux.

5. Procédé selon la revendication 3 ou la revendication 4, dans lequel le au moins un agent de vulcanisation comprend une amine, un amide, un isocyanate ou un peroxyde.

6. Procédé selon la revendication 3, 4 ou 5, dans lequel le au moins un agent de vulcanisation représente au moins 1 %, mais moins de 60 % en poids du matériau adhésif.

7. Procédé selon l'une quelconque des revendications précédentes, dans lequel l'adhésif contient de 30 % à moins de 80 % en poids du matériau à base d'époxy.

8. Procédé selon l'une quelconque des revendications 3 à 7, dans lequel le au moins un agent de vulcanisation peut vulcaniser le composé polymère à une température inférieure à 100 °C.

9. Procédé selon l'une quelconque des revendications 1 à 8, dans lequel le premier organe est une nervure et le second organe est un panneau.

10. Procédé selon l'une quelconque des revendications 1 à 9, dans lequel l'étape d'activation du matériau adhésif comprend l'application d'une pression au matériau adhésif de telle sorte que les encapsulations se rompent, amenant ainsi le matériau adhésif à vulcaniser entre et à adhérer au premier organe et au second organe et à former la structure.

11. Procédé selon la revendication 10, dans lequel la pression est d'au moins 1 MPa.

12. Procédé selon la revendication 10 ou 11, dans lequel la pression est appliquée en comprimant le matériau adhésif entre le premier organe et le second organe.

13. Procédé selon l'une quelconque des revendications précédentes, dans lequel les encapsulations sont formées d'un thermoplastique.
